# EUROPÄISCHE PATENTSCHRIFT

(11) **EP 2 383 202 B1**
(45) Veröffentlichungstag und Bekanntmachung des Hinweises auf die Patenterteilung: **14.05.2014**
(21) Anmeldenummer: 11163704.7
(22) Anmeldetag: 26.04.2011
(51) Int. Cl.: B65D 81/05, B60P 7/08

(54) **Kantenschutzelement**
Edge protection element
Elément de protection des bords

(30) Priorität: 28.04.2010 DE 102010018650
(43) Veröffentlichungstag der Anmeldung: 02.11.2011
(73) Patentinhaber: Spanset Inter AG, 8832 Wollerau (CH)
(72) Erfinder: Mamié, André, 8807, Freienbach (CH); Glasen, Werner, 52134, Herzogenrath (DE); Klein, Peter, 52134, Herzogenrath (DE)
(74) Vertreter: Cohausz & Florack

(56) Entgegenhaltungen:
- EP-A1- 0 295 404
- WO-A1-03/024830
- WO-A1-2007/045822
- WO-A2-2008/087370
- US-A1- 2002 094 429
- US-A1- 2006 280 891

## Beschreibung

Die vorliegende Erfindung betrifft ein Kantenschutzelement zum Schutz einer Kante eines mit Hilfe eines Spannmittels, wie Gurt, Band oder Seil, zu verzurrenden Gutes. Dabei umfasst das Kantenschutzelement zwei Schenkelabschnitte, die jeweils eine dem Gut zugeordnete und in Montagestellung an ihm anliegende Anlagefläche besitzen. Die Schenkelabschnitte des Schutzelements bestehen aus einem festen Kunststoff mit einer vergleichbar geringen Elastizität. Um einen sicheren Halt an dem jeweils zu verspannenden Gut zu gewährleisten, ist an der Anlagefläche mindestens eines der Schenkelabschnitte mindestens ein Flächenabschnitt vorgesehen, der aus einem gegenüber dem Kunststoff der Schenkelabschnitte nachgiebigerem Material gebildet ist. Dabei ist der aus dem nachgiebigeren Material bestehende Flächenabschnitt durch eine unmittelbar stoffschlüssig mit dem jeweiligen Schenkelabschnitt verbundene und in ihn eingearbeitete Einlage gebildet.

Solche Kantenschutzelemente sind zum Beispiel aus der US 2002/0094429 A1 oder der WO 2006/125107 A2 bekannt. Sie werden typischerweise eingesetzt, wenn aus dünnen Bahnen, beispielsweise Papier- oder Stahlbändern, gewickelte Rollen oder aus ebenso empfindlichen Platten gebildete Stapel auf der Ladefläche eines Transportfahrzeugs verspannt werden sollen. Die zum Verspannen verwendeten Spannmittel, z.B. Spanngurte oder -bänder, werden dabei über die auf die empfindlichen Kantenbereiche des jeweiligen Transportguts aufgesetzten Kantenschutzelemente geführt. Auf diese Weise werden die von den Spannmitteln aufgebrachten Kräfte großflächig auf das Transportgut verteilt und insbesondere Beschädigungen der jeweiligen Kante verhindert.

Um sicherzustellen, dass das jeweilige Kantenschutzelement sowohl beim Ansetzen an das jeweilige Gut als auch unter den im Gebrauch auftretenden Belastungen seine optimale Position beibehält, ist vorgeschlagen worden, die mit den jeweiligen Flächen des zu verspannenden Guts in Kontakt kommenden Anlageflächen zumindest abschnittsweise mit einem Material zu belegen, dass gegenüber dem Grundmaterial des Kantenschutzelements eine höhere Elastizität und einen höheren Reibwert besitzt.

Neben den eingangs erwähnten Möglichkeiten einer unmittelbar stoffschlüssigen Anbindung des elastischen Materials an das Kantenschutzelement ist aus der DE 199 04 843 C5 ein Kantenschutzelement bekannt, welches auf mindestens einer seiner Anlageflächen eine Gummiauflage aufweist, die so beschaffen ist, dass sie ein Verrutschen verhindert und aufgrund ihrer Nachgiebigkeit verhindert, dass das Schutzelement an dem zu verzurrenden Gut Abdrücke hinterlässt. Um einen sicheren Halt der Gummiauflage an dem jeweiligen Schenkelabschnitt des Kantenschutzelements zu gewährleisten, kann die Auflage mit Stegen versehen sein, welche in Nuten eingedrückt werden, die in die jeweilige Anlagefläche des Kantenschutzelements eingeformt sind. Auf diese Weise soll eine form- und kraftschlüssige Verbindung zwischen Kantenschutzelement und der Gummiauflage hergestellt sein. Alternativ oder ergänzend kann die Gummiauflage auch mittels einer Klebschicht an die jeweilige Anlagefläche angeklebt werden.

Praktische Erfahrungen mit in der voranstehend erläuterten Weise ausgestatteten Kantenschutzelementen zeigen, dass die Herstellung und Befestigung der Gummiauflage an dem jeweiligen Schenkelabschnitt des Kantenschutzelements nicht nur aufwändig ist, sondern dass die Gummiauflage sich auch bereits bei vergleichbar geringen Belastungen oder einer zu kurzen Verwendungsdauer von der jeweiligen Anlagefläche löst.Neben dem voranstehend erläuterten Stand der Technik ist aus der US 2006/280 891 A1 ein aus Kunststoff hergestelltes Kantenschutzelement bekannt, welches aus zwei fest miteinander verbundenen Schenkelabschnitten besteht. An der Anlagefläche eines Schenkelabschnitts ist ein streifenförmiger und druckempfindlicher Klebestreifen angeklebt. Auch hier ergeben sich im Gebrauch die voranstehend schon diskutierten Probleme.

In der WO 2007/045822 A1 ist ein Eckschutz vorgestellt worden, der beispielsweise beim Transport von Glasscheiben eingesetzt werden kann. Auf bzw. in die im Gebrauch an der Glasfläche anliegende seitliche Innenfläche des Kantenschutzes ist entweder ein in Draufsicht dreieckig oder rechteckiges Klebepad aufgelegt oder eingesetzt in eine Ausnehmung, die in den Eckschutz eingeformt ist. Gehalten an dem Eckschutz wird der Klebepad jedoch auch hier ausschließlich durch eine Klebeverbindung.

Vor diesem Hintergrund bestand die Aufgabe der Erfindung darin, ein kostengünstig herstellbares Kantenschutzelement zu schaffen, bei dem auch unter den sich in der Praxis stellenden rauen Einsatzbedingungen bei minimierter Gefahr von Beschädigungen des zu verspannenden Guts eine hohe Rutschsicherheit über einen langen Verwendungszeitraum gewährleistet ist.

Diese Aufgabe ist erfindungsgemäß durch ein Kantenschutzelement mit den in Anspruch 1 angegebenen Merkmalen gelöst worden. Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes, zum Schutz einer Kante eines mit Hilfe eines Spannmittels, wie Gurt, Band oder Seil, zu verzurrenden Gutes vorgesehenes Kantenschutzelement weist in Übereinstimmung mit dem eingangs diskutierten Stand der Technik zwei Schenkelabschnitte auf, die jeweils eine dem Gut zugeordnete und in Montagestellung an ihm anliegende Anlagefläche besitzen. Dabei bestehen die Schenkelabschnitte aus einem festen Kunststoff mit einer geringen Elastizität. Zusätzlich ist an der Anlagefläche eines der Schenkelabschnitte mindestens ein Flächenabschnitt vorgesehen, der aus einem gegenüber dem Kunststoff der Schenkelabschnitte nachgiebigerem Material gebildet ist.

Erfindungsgemäß ist nun der aus dem nachgiebigeren Material bestehende Flächenabschnitt durch eine unmittelbar stoffschlüssig mit dem jeweiligen Schenkelabschnitt verbundene und in ihn eingearbeitete Einlage gebildet. Die Erfindung basiert also auf dem Gedanken, bei einem aus einem festen Kunststoff hergestellten Kantenschutzwinkel an mindestens einer seiner mit dem jeweiligen Gut in Kontakt kommenden Anlageflächen einen Flächenabschnitt aus einem Kunststoff vorzusehen, der eine höhere Elastizität und einen damit einhergehend höheren Reibwert hat als der umgebende Kunststoff der Schenkelabschnitte des Kantenschutzelements. Dabei ist dieser Flächenabschnitt erfindungsgemäß durch eine in den jeweiligen Schenkel des Kantenschutzelements eingelassene und mit dem Schenkel stoffschlüssig verbundene Einlage gebildet. Anders als beim eingangs diskutierten Stand der Technik erfolgt dabei die stoffschlüssige Anbindung der elastischen Einlage an den jeweiligen Schenkelabschnitt des Kantenschutzelements nicht durch Verkleben mittels eines zusätzlich eingebrachten Klebers, sondern unmittelbar, d.h. durch Vernetzung, Verschweißung oder vergleichbare Verfahren, bei denen es zu einer unmittelbaren, unlösbaren Verbindung zwischen den Werkstoffen von Kantenschutz und Einlage kommt.

Diese Art und Weise der Einbettung der nachgiebigen Einlage erlaubt eine besonders kostengünstige Fertigung. Gleichzeitig lässt sich durch die erfindungsgemäß vorgesehene unmittelbare Ankopplung der Einlage an den Grundwerkstoff des Kantenschutzelements eine dauerhaft feste Verbindung gewährleisten, die auch unter den in der Praxis auftretenden Belastungen sicher an dem jeweiligen Schenkelabschnitt des erfindungsgemäßen Kantenschutzelements bestehen bleibt.

Eine optimale Verbindung zwischen dem Kantenschutzelement und seiner nachgiebigen Einlage ergibt sich dann, wenn die Kunststoffe, aus denen Einlage und Kantenschutzelement gefertigt sind, verwandt sind. So kann der feste Kunststoff der Schenkelabschnitte aus der Gruppe der Thermoplaste stammen, während der Kunststoff der Einlage aus der Gruppe der thermoplastischen Elastomere gewählt wird.

Eine besonders effektive, kostensparende Möglichkeit der Herstellung des erfindungsgemäßen Kantenschutzelements besteht darin, die Einlage und mindestens den mit ihr versehenen Schenkelabschnitt zu koextrudieren oder die elastische Einlage an den jeweiligen Schenkelabschnitt anzuextrudieren, wobei es selbstverständlich besonders günstig ist, wenn das Kantenschutzelement insgesamt in einem Zuge durch Ko- oder Anextrusion hergestellt wird. Es entsteht auf diese Weise ein einstückiges Kantenschutzelement, das in einem kontinuierlichen Ablauf in beliebigen Längen hergestellt werden kann.

Wenn hier von einer "Einlage" die Rede ist, ist damit gemeint, dass es in Folge der erfindungsgemäß vorgesehenen unmittelbaren Verkopplung des Grundkörpers des Kantenschutzelements und der betreffenden Einlage regelmäßig dazu kommt, dass die Einlage nicht einfach auf der jeweiligen Anlagefläche aufliegt, sondern zumindest in geringem Maße auch in die betreffende Anlagefläche hineingreift. Dabei ergibt sich ein besonders sicherer Halt der Einlage an der jeweiligen Anlagefläche des Kantenschutzelements, wenn dort ein von dem Werkstoff der Einlage gefülltes Formelement gebildet ist, das vom Werkstoff der Einlage gefüllt ist. Bei dem betreffenden Formelement kann es sich beispielsweise um eine Nut oder eine einfache in den jeweiligen Schenkelabschnitt des Kantenschutzelements eingeformte Einsenkung handeln.

Eine andere Möglichkeit der erfindungsgemäß unter Verzicht auf Zusatzstoffe unmittelbar erfolgenden Ankopplung der elastischen Einlage an den jeweiligen Schenkelabschnitt besteht darin, die Einlage mit dem betreffenden Schenkelabschnitt zu verschweißen.

Der sichere Halt der elastischen Einlage an dem Kantenschutzelement wird erfindungsgemäß dadurch unterstützt, dass die Einlage nicht nur stoff-, sondern auch formschlüssig mit dem jeweiligen Schenkelabschnitt verbunden ist. Dazu können in die jeweils mit der Einlage zu versehende Anlagefläche mit Hinterschneidungen versehene Vertiefungen eingeformt sein, die vom Werkstoff der Einlage gefüllt sind.

Indem die Einlage erfindungsgemäß streifenförmig ausgebildet ist, wird das erfindungsgemäße Kantenschutzelement den Anforderungen der Praxis in besonders effektiver Weise gerecht und lässt sich gleichzeitig kostengünstig und fertigungstechnisch einfach herstellen. Dies gilt insbesondere dann, wenn sich die streifenförmige Einlage über die gesamte Breite der jeweiligen Anlagefläche erstreckt.

Eine besonders gute Wirkung im Hinblick auf die elastische Abfederung und den Schutz vor unbeabsichtigtem Verrutschen ergibt sich bei einem erfindungsgemäßen Kantenschutzelement dadurch, dass der durch die Einlage gebildete Flächenabschnitt der Anlagefläche gegenüber der ihn umgebenden Anlagefläche erhaben ist.

Die Gefahr einer Ablösung des Kantenschutzelements unter den im praktischen Einsatz auftretenden Kräften ist dadurch minimiert, dass die Einlage erfindungsgemäß mit ihren Randbereichen bündig an die die Einlage umgebenden Randbereich der Anlagefläche angeschlossen ist.

Eine hohe Belastbarkeit bei gleichzeitig minimiertem Gewicht und Materialbedarf ergibt sich dann, wenn bei einem erfindungsgemäßen Kantenschutzelement zumindest die Schenkelabschnitte nach Art von Hohlprofilen ausgebildet und durch in ihnen ausgebildete Streben ausgesteift sind.

Um für viele Verspannaufgaben zweckmäßige Abmessungen des Kantenschutzelements bereitzustellen ist bei einem erfindungsgemäßen Kantenschutzelement die Breite des Kantenschutzelements um ein Vielfaches größer ist als die Länge seiner Schenkelabschnitte. Als "Länge" der Schenkelabschnitte ist dabei der Abstand zwischen dem von den Schenkelabschnitten eingeschlossenen inneren Kante zum jeweils gegenüberliegenden freien Rand der Schenkelabschnitte bezeichnet, während mit der "Breite" der Schenkelabschnitte die Erstreckung quer zu dieser "Länge", also parallel zu der inneren Kante gemeint ist.

Eine die Vielseitigkeit der Verwendbarkeit steigernde Ausgestaltung eines Kantenschutzelements ist allgemein dadurch gekennzeichnet, dass ein solches Kantenschutzelement ein lösbar mit ihm verbundenes Funktionselement umfasst. Besonders vorteilhaft wirkt sich die Anordnung eines solchen austauschbaren Funktionselements bei Kantenschutzelementen aus, die in erfindungsgemäßer Weise mit einer Einlage aus einem nachgiebigen Material versehen sind.

Bei den in der voranstehend beschriebenen Weise an einem Kantenschutzelement lösbar befestigten Funktionselement kann es sich beispielsweise um eine Führung für das Spannmittel handeln, das in Kombination mit dem entsprechend ausgestatteten Kantenschutzelement zum Verspannen des jeweiligen Guts genutzt wird. Dabei kann das Funktionselement beispielsweise mit Formelementen, wie seitlichen Wangen, versehen sein, die das Spannmittel an seinen Längsseiten führen, um eine lagegerechte Ausrichtung von Spannmittel und Kantenschutzelement in Bezug auf das zu verspannende Gut sicherzustellen. Genauso kann das jeweilige Funktionselement nach Art einer Stütze ausgebildet sein, durch die im Gebrauch das Spannmittel in an sich bekannter Weise so über das Kantenschutzelement geleitet wird, dass der äußere Eckbereich des Kantenschutzelements, der der zu schützenden Kante des zu verspannenden Guts zugeordnet ist, weitestgehend unbelastet bleibt von resultierenden Kräften, die von dem unter Last stehenden Spannmittel ausgehen.

Um die lösbare Verbindung zwischen dem Funktionselement und dem Kantenschutzelement zu erleichtern, kann an mindestens einem der Schenkelabschnitte ein Formelement für eine formschlüssige, lösbare Ankopplung des Funktionselements ausgebildet sein. Bei diesem Formelement kann es sich beispielsweise um eine Durchgangsöffnung, eine Ausnehmung oder einen Vorsprung handeln, mit der oder dem ein korrespondierend geformtes Formteil des Funktionselements zusammenwirkt.

Das erfindungsgemäß lösbar an dem Kantenschutzelement angeordnete Funktionselement kann auch dazu dienen, im Bereich der Anlageflächen einen Anschlag für solche Güter zu bilden, deren der Anlagefläche des Kantenschutzelements zugeordnete Außenfläche eine von der betreffenden Anlagefläche des Kantenschutzelements abweichende Gestalt aufweist. So ist es beispielsweise mit Hilfe eines solchen als Anschlag vorgesehenen Funktionselements problemlos möglich, ein Kantenschutzelement mit ebenen Anlageflächen an einem zu verspannenden Gut anzulegen, dessen Außenflächen nach Art einer Zylinderfläche nach außen gewölbt sind. Eine solche Anwendung liegt beispielsweise vor, wenn ein Kantenschutzelement zum Schutz der Kanten einer zu verspannenden Papierrolle oder eines Stahlcoils verwendet wird.

Nachfolgend wird die Erfindung anhand von Ausführungsbeispielen näher erläutert. Es zeigen:
- Fig. 1: ein Kantenschutzelement in perspektivischer Ansicht;
- Fig. 2: ein an dem Kantenschutzelement befestigbares, als Führung für ein Spannmittel dienendes Funktionselement in perspektivischer Ansicht,
- Fig. 3: das Funktionselement gemäß Fig. 2 in an dem Kantenschutzelement befestigten Zustand in einem ausschnittsweisen Längsschnitt,
- Fig. 4: das Kantenschutzelement mit einem als Anschlag dienenden Funktionselement in einer Explosionsdarstellung,
- Fig. 5: das Kantenschutzelement gemäß Fig. 4 in perspektivischer Darstellung,
- Fig. 6: das Kantenschutzelement mit einem weiteren als Führung für ein Spannmittel dienenden Funktionselement in seitlicher Ansicht;
- Fig. 7: das Kantenschutzelement gemäß Fig. 6 in einer perspektivischen Ansicht.

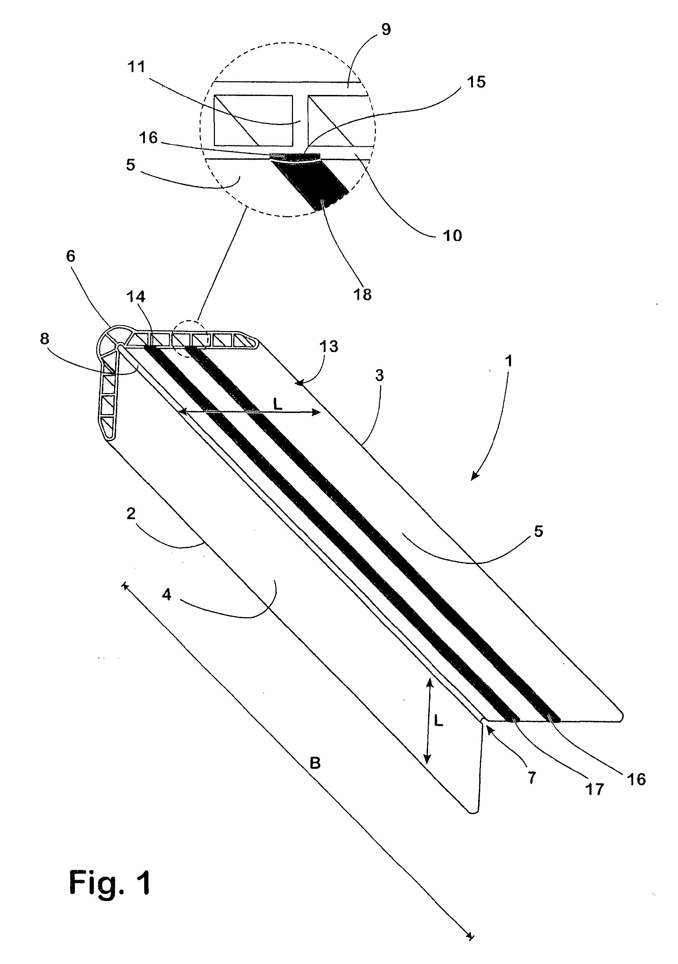

Das in Fig. 1 dargestellte Kantenschutzelement 1 umfasst einen ersten Schenkelabschnitt 2 und einen dazu im Wesentlichen rechtwinklig ausgerichteten Schenkelabschnitt 3. Auf den einander zugeordneten Seiten der Schenkelabschnitte 2,3 ist jeweils eine ebene, langgestreckt rechteckig geformte Anlagefläche 4,5 ausgebildet, die sich über die gesamte Breite B und die gesamte Länge L des jeweiligen Schenkelabschnitts 2,3 erstreckt. Die Länge L des einen Schenkelabschnitts 2 ist dabei kleiner als die Länge L des anderen Schenkelabschnitts 3.

Der Eckbereich 6, über den die Schenkelabschnitte 2,3 miteinander verbunden sind, ist nach außen gewölbt. Gleichzeitig ist im Bereich der inneren Kante 7 des Kantenschutzelements 1, an der die gedachten Verlängerungen der Anlageflächen 4,5 einander schneiden, in den Eckbereich 6 eine sich über die Breite B erstreckende Hohlkehle 8 eingeformt, deren Gestalt und Abmessungen so gewählt sind, dass die zu schützende Kante K des zu verspannenden Guts G frei in die Hohlkehle 8 ragt, ohne Material des Kantenschutzelements 1 zu berühren. Auf diese an sich bekannte Weise ist sichergestellt, dass die zu schützende Kante K auch unter den im Gebrauch auftretenden Spannkräften unbelastet bleibt.

Das Kantenschutzelement 1 ist als Hohlkammerprofil ausgebildet, zwischen dessen äußeren Wänden 9,10 sich Versteifungsstreben 11,12 erstrecken.

In die Anlagefläche 5 des längeren Schenkelabschnitts 3 sind mit Abstand zueinander und zu der freien, gegenüberliegend zur Hohlkehle 8 liegenden äußeren Kante 13 des Schenkelabschnitts 3 zwei parallel zueinander verlaufende Nuten 14,15 eingeformt, die mit jeweils einer aus einem elastischen Material bestehenden Einlage 16,17 gefüllt sind. Mit ihrer freien, leicht nach außen gewölbten Außenseite 18 gehen die Einlagen 16,17 jeweils bündig in die an sie angrenzenden Flächenabschnitte der Anlagefläche 4 über.

Der durch die einstückig miteinander verbundenen Schenkelabschnitte 2,3 und den Eckbereich 6 gebildete Grundkörper des Kantenschutzelements 1 ist aus einem thermoplastischen Hartkunststoff gefertigt, während die Einlagen 16,17 aus einem thermoplastischen Elastomer bestehen, welcher eine hohe Elastizität und an seiner Außenseite 18 einen hohen Reibwert besitzt. Dabei sind der Grundkörper und die elastischen Einlagen 16,17 durch Koextrusion in einem Zuge erzeugt und so miteinander verbunden worden, dass sie ohne Zuhilfenahme zusätzlicher Klebstoffe unlösbar fest miteinander verbunden sind.

In die ebenfalls eben ausgebildete Außenfläche 19 der äußeren Wand 9 des Schenkelabschnitts 3 sind in regelmäßigen Abständen als kreisrunde, bis zu der Anlagefläche 5 geführte Durchgangsöffnungen ausgebildete Aufnahmen 20 eingeformt, deren Mittelpunkte auf einer sich parallel zur freien Kante 13 des Schenkelabschnitts 3 erstreckenden Linie angeordnet sind.

In die Aufnahmen 20 können Formelemente 21,22, wie beispielsweise Rasten oder hakenförmige Vorsprünge, die an ein Funktionselement 23,24,25 angeformt sind, so eingeführt werden, dass das jeweilige Funktionselement 23,25 über das betreffende Formelement 21,22 formschlüssig und lösbar an dem jeweiligen Schenkelabschnitt 3 gehalten ist. Ebenso lassen sich in die Aufnahmen 20 Schrauben oder andere Verbindungselemente 26 stecken, um ein Funktionselement 24 an dem Kantenschutzelement 1 zu befestigen. Auch an dem anderen Schenkelabschnitt 2 können entsprechende Aufnahmen vorhanden sein.

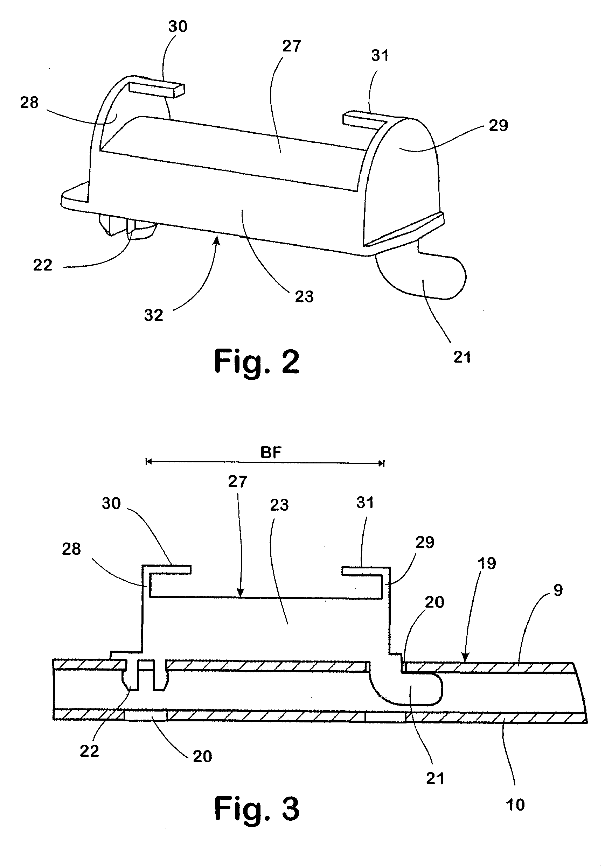

Das in den Figuren 2 und 3 dargestellte Funktionselement 23 weist eine ebene Führungsfläche 27 auf, die seitlich durch jeweils eine Wange 28,29 begrenzt ist. An den freien Enden der Wangen 28,29 sind zusätzliche Vorsprünge 30,31 angeformt, die gegeneinander und parallel zu der ebenen Führungsfläche 27 ausgerichtet sind. Ihre freien Enden haben dabei einen Abstand, der etwa drei Fünftel der Breite BF der Führungsfläche 27 entspricht.

An die der Außenfläche 19 zugeordnete Unterseite 32 des Funktionselements 23 ist ein erstes Formelement 21 in Form eines seitlich über die eine Seitenfläche des Funktionselements 23 hinaus stehenden Vorsprungs angeformt. Zum Befestigen des Funktionselements 21 an dem Kantenschutzelement 1 wird das Formelement 21 in eine der Aufnahmen 20 gesteckt.

Im Bereich der gegenüberliegenden Schmalseite des Funktionselements 21 sind an der Unterseite 32 in einem Abstand, der einem ganzen Vielfachen des Abstands von zwei Aufnahmen 20 entspricht, als weitere Formelemente 22 zusätzlich Rastvorsprünge vorhanden. Deren Abmessungen sind so an die Abmessungen der Aufnahmen 20 angepasst, dass bei an dem Kantenschutzelement 1 angesetzten Funktionselement 23 die Rastvorsprünge der Formelemente 22 formschlüssig mit dem die Aufnahme 20 umgebenden Rand verrasten.

Im Gebrauch dient das Funktionselement 23 zum Führen eines hier nicht dargestellten Spannmittels, beispielsweise eines Spannbands oder -gurts, das flach auf die Führungsfläche 27 aufgelegt wird. Das Funktionselement 23 wird dementsprechend so an dem Kantenschutzelement 1 ausgerichtet, dass seine Führungsfläche 27 sich in Richtung der Breite B des Kantenschutzelements 1 erstreckt.

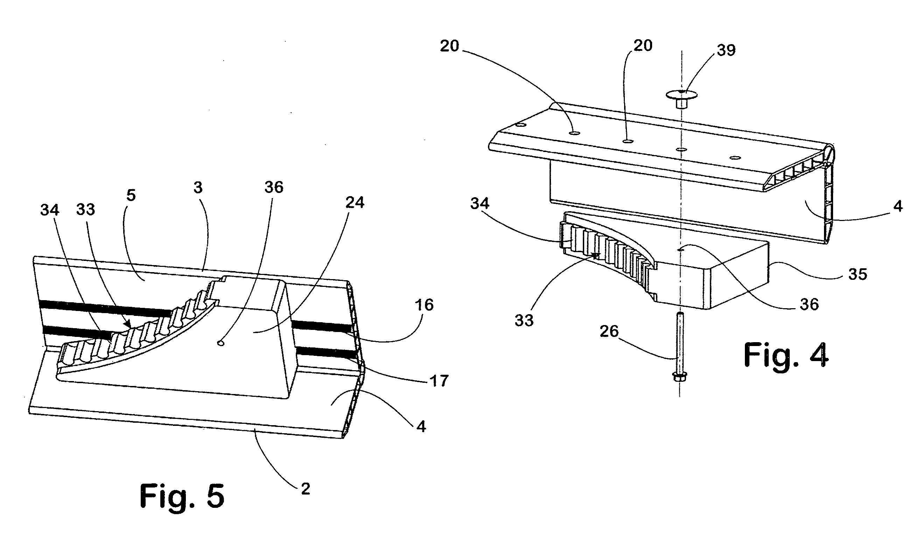

Bei dem in den Figuren 4 und 5 gezeigten Funktionselement 24 handelt es sich um einen Anschlag, über den das Kantenschutzelement 1 trotz seiner an sich ebenen Anlageflächen 4,5 auch an eine nach Art einer Zylinderfläche ausgewölbte Außenfläche eines zu verspannenden Guts angelegt werden kann. Dazu weist das Funktionselement 24 an einer Längsseite eine der Krümmung der betreffenden Außenflächen angepasste Anlagefläche 33 auf. Die Anlagefläche 33 ist dabei durch die Stirnflächen einer Vielzahl von gleichmäßig an der betreffenden Längsseite angeformten Vorsprüngen 34 gebildet.

Gegenüberliegend zu der Anlagefläche 33 hat das Funktionselement 24 eine ebene zweite Anlagefläche 35, die zur Anlage an die Anlagefläche 4 des einen Schenkelabschnitts 2 des Kantenschutzelements 1 bestimmt ist. Gleichzeitig ist in das Funktionselement 24 eine Durchgangsöffnung 36 eingeformt, deren Achse parallel und in einem Abstand zur Anlagefläche 35 angeordnet ist, die dem Abstand der Aufnahmen 20 zur Anlagefläche 4 des Schenkelabschnitts 2 entspricht.

Zur Befestigung wird das Funktionselement 24 mit seiner Anlagefläche 35 an die Anlagefläche 4 angelegt und entlang der Anlagefläche 4 soweit verschoben, bis die Durchgangsöffnung 36 mit einer der Aufnahmen 20 fluchtet. Anschließend wird eine ausreichend lange Schraube 26 durch die Durchgangsöffnung 36 und die zugeordnete Aufnahme 20 gesteckt und mittels einer Mutter 37 gegen die Außenfläche 19 des Schenkelabschnitts 5 fixiert.

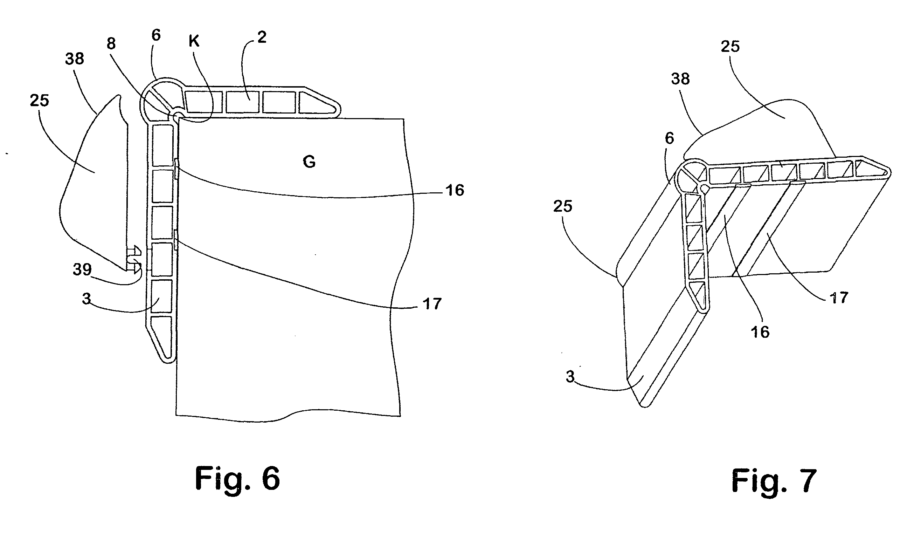

Mittels des in den Figuren 6,7 dargestellten Funktionselements 25 wird das jeweilige hier nicht dargestellte Spannmittel im Gebrauch in an sich bekannter Weise so geführt, dass der Eckbereich 6 des Kantenschutzelements 1 von keiner direkten von dem Spannmittel ausgehenden resultierenden Kraft belastet wird. Dazu ist das Funktionselement 25 als buckelartige Stütze mit einer Umlenkkante 38 ausgebildet, die so weit vom kritischen Eckbereich 6 des Kantenschutzelements 1 entfernt ist, dass an der Umlenkkante 38 umgelenkte Spannmittel mit ausreichendem Abstand am Eckbereich 6 vorbeigeführt wird.

Für die lösbare Befestigung an dem Kantenschutzelement 1 weist das Funktionselement 25 als Rasten ausgebildete Formelemente 39 und ein weiteres nach Art eines Vorsprungs ausgebildetes, hier nicht sichtbares Formelement auf. Die betreffenden Formelemente des Funktionselements 25 entsprechen dabei in ihrer Formgebung, Anordnung und Funktionsweise den Formelementen 32,33 des Funktionselements 23.

### BEZUGSZEICHEN

- 1: Kantenschutzelement
- 2: erster Schenkelabschnitt des Kantenschutzelements 1
- 3: zweiter Schenkelabschnitt des Kantenschutzelements 1
- 4: Anlagefläche des ersten Schenkelabschnitts 2
- 5: Anlagefläche des zweiten Schenkelabschnitts 3
- 6: Eckbereich des Kantenschutzelements 1
- 7: innere Kante des Kantenschutzelements 1
- 8: Hohlkehle
- 9,10: äußere Wände des Kantenschutzelements 1
- 11,12: Versteifungsstreben
- 13: äußere Kante des Schenkelabschnitts 3
- 14,15: Nuten
- 16,17: elastische Einlage
- 18: Außenseite der Einlagen 16,17
- 19: Außenfläche des Schenkelabschnitts 3
- 20: Aufnahmen
- 21,22: Formelemente
- 23-25: Funktionselemente
- 26: Verbindungselemente (Schraube)
- 27: Führungsfläche des Funktionselements 23
- 28,29: Wangen des Funktionselements 23
- 30,31: Vorsprünge
- 32: Unterseite des Funktionselements 23
- 33: Anlagefläche
- 34: Vorsprünge
- 35: zweite Anlagefläche des Funktionselements 24
- 36: Durchgangsöffnung
- 37: Mutter
- 38: Umlenkkante
- 39: Formelemente
- B: Breite der Schenkelabschnitte 2,3
- BF: Breite der Führungsfläche 27
- K: zu schützende Kante des zu verspannenden Guts G
- L: jeweilige Länge der Schenkelabschnitte 2,3

## Patentansprüche

1. Kantenschutzelement zum Schutz einer Kante (K) eines mit Hilfe eines Spannmittels, wie Gurt, Band oder Seil, zu verzurrenden Gutes (G), mit zwei Schenkelabschnitten (2,3), die jeweils eine dem Gut (G) zugeordnete und in Montagestellung an ihm anliegende Anlagefläche (4,5) besitzen, wobei die Schenkelabschnitte (2,3) aus einem festen Kunststoff mit einer geringen Elastizität bestehen und an der Anlagefläche (4,5) eines der Schenkelabschnitte (2,3) mindestens ein Flächenabschnitt vorgesehen ist, der aus einem gegenüber dem Kunststoff der Schenkelabschnitte (2,3) nachgiebigerem Material gebildet ist, wobei der aus dem nachgiebigeren Material bestehende Flächenabschnitt durch eine unmittelbar stoffschlüssig mit dem jeweiligen Schenkelabschnitt (2,3) verbundene und formschlüssig in ihn eingearbeitete Einlage (16,17) gebildet ist, **dadurch gekennzeichnet, dass** die Einlage (16,17) streifenförmig ausgebildet verbunden ist, **dass** die Einlage (16,17) mit ihren Randbereichen bündig an die die Einlage (16,17) umgebende Randbereiche der Anlagefläche (5) angeschlossen ist, **dass** die Breite (B) des Kantenschutzelements um ein Vielfaches größer ist als die Länge (L) der Schenkelabschnitte (2,3) und dass der durch die Einlage (16, 17) gebildete Flächenabschnitt gegenüber der ihn umgebenden Anlagefläche (5) erhaben ist.

2. Kantenschutzelement nach Anspruch 1, **dadurch gekennzeichnet, dass** der feste Kunststoff der Schenkelabschnitte (2,3) aus der Gruppe der Thermoplaste gewählt ist.

3. Kantenschutzelement nach Anspruch 1 oder 2, **dadurch gekennzeichnet, dass** der Kunststoff der Einlage (16,17) aus der Gruppe der thermoplastischen Elastomere gewählt ist.

4. Kantenschutzelement nach einem der vorangehenden Ansprüche, **dadurch gekennzeichnet, dass** die Einlage (16,17) und die Schenkelabschnitte (2,3) koextrudiert sind.

5. Kantenschutzelement nach einem der Ansprüche 1 bis 3, **dadurch gekennzeichnet, dass** die Einlage (16,17) mit dem jeweiligen Schenkelabschnitt (2,3) verschweißt ist.

6. Kantenschutzelement nach einem der vorangehenden Ansprüche, **dadurch gekennzeichnet, dass** die Schenkelabschnitte (2,3) nach Art von Hohlprofilen ausgebildet und durch in ihnen vorhandene Streben (11,12) ausgesteift sind.

7. Kantenschutzelement nach einem der voranstehenden Ansprüche, **dadurch gekennzeichnet, dass** ein Funktionselement (23-25) mit ihm lösbar verbunden ist.

8. Kantenschutzelement nach Anspruch 7, **dadurch gekennzeichnet, dass** in mindestens einem der Schenkelabschnitte (2,3) ein Formelement (20) für eine formschlüssige, lösbare Ankopplung des Funktionselements (23-25) ausgebildet ist.

9. Kantenschutzelement nach Anspruch 8, **dadurch gekennzeichnet, dass** das Formelement (20) für die formschlüssige, lösbare Ankopplung eines Funktionselements (23-25) eine Ausnehmung ist.

10. Kantenschutzelement nach einem der Ansprüche 7 bis 9, **dadurch gekennzeichnet, dass** das Funktionselement (23,25) eine Führung für das Spannmittel bildet.

11. Kantenschutzelement nach einem der Ansprüche 7 bis 10, **dadurch gekennzeichnet, dass** das Funktionselement (24) einen Anschlag zum formschlüssigen Anlegen des Kantenschutzelements (1) an eine Fläche des zu verspannenden Guts (G) bildet.

## Claims

1. Edge protection element for protecting an edge (K) of an article (G) to be lashed by means of a tensioning means such as a belt, band or cable, having two leg sections (2, 3), each of which has a bearing surface (4, 5) assigned to the article (G) and bearing thereon in the assembled position, the leg sections (2, 3) consisting of a solid plastic having a low elasticity and at least one surface section, which is formed from a material that is more pliant than the plastic of the leg sections (2, 3), being provided on the bearing surface (4, 5) of one of the leg sections (2, 3), the surface section consisting of the more pliant material being formed by an inlay (16, 17) connected directly with a material fit to the respective leg section (2, 3) and incorporated therein with a form fit, **characterised in that** the inlay (16, 17) is connected in the form of a strip, **in that** the inlay (16, 17) is connected flush with its edge regions to the edge regions of the bearing surface (5) which surround the inlay (16, 17), **in that** the width (B) of the edge protection element is a multiple greater than the length (L) of the leg sections (2, 3), and **in that** the surface section formed by the inlay (16, 17) is raised relative to the bearing surface (5) surrounding it.

2. Edge protection element according to Claim 1, **characterised in that** the solid plastic of the leg sections (2, 3) is selected from the group of thermoplastics.

3. Edge protection element according to Claim 1 or 2, **characterised in that** the plastic of the inlay (16, 17) is selected from the group of thermoplastic elastomers.

4. Edge protection element according to one of the preceding claims, **characterised in that** the inlay (16, 17) and the leg sections (2, 3) are coextruded.

5. Edge protection element according to one of Claims 1 to 3, **characterised in that** the inlay (16, 17) is welded to the respective leg section (2, 3).

6. Edge protection element according to one of the preceding claims, **characterised in that** the leg sections (2, 3) are formed in the manner of hollow profiles and are stiffened by struts (11, 12) present in them.

7. Edge protection element according to one of the preceding claims, **characterised in that** a functional element in (23-25) is releasably connected thereto.

8. Edge protection element according to Claim 7, **characterised in that** a shaped element (20) for releasable form-fit coupling of the functional element (23-25) is formed in at least one of the leg sections (2, 3).

9. Edge protection element according to Claim 8, **characterised in that** the shaped element (20) is a recess for the releasable form-fit coupling of a functional element (23-25).

10. Edge protection element according to one of Claims 7 to 9, **characterised in that** the functional element (23, 25) forms a guide for the tensioning means.

11. Edge protection element according to one of Claims 7 to 10, **characterised in that** the functional element (24) forms a stop unit for the form-fit bearing of the edge protection element (1) on a surface of the article (G) to be lashed.

## Revendications

1. Elément de protection d'un bord (K) d'une marchandise (G) devant être ixée avec des moyens de fixation, tels que sangle, attache ou cordage, lequel élément comprend deux sections en forme d'ailes (2, 3) qui sont dotées chacune d'une surface d'appui (4, 5) associée à la marchandise (G) et portant contre celle-ci dans la position de montage, sachant que les sections en forme d'ailes (2, 3) consistent en une matière plastique de consistance ferme, présentant une faible élasticité, et que, sur la surface d'appui (4, 5) de l'une des sections en forme d'ailes (2, 3), est prévue au moins une section qui consiste en une matière plastique plus souple que celle formant les sections en forme d'ailes (2, 3), la section consistant en matière plus souple étant formée par un insert (16, 17) qui est relié directement à la section en forme d'aile respective (2, 3) par fusion de matière, et est agencé dans celle-ci par engagement géométrique,
**caractérisé en ce que**
l'insert (16, 17) est relié en forme de bande, **que** l'insert (16, 17) est raccordé à fleur aux zones marginales de la surface d'appui (5) qui entourent ledit insert (16, 17), **que** la largeur (B) de l'élément de protection d'un bord est supérieure d'un multiple à la longueur (L) des sections en forme d'ailes (2, 3) et **qu e** la section formée par l'insert (16, 17) est en relief par rapport à la surface d'appui (5) qui l'entoure.

2. Elément de protection d'un bord selon la revendication 1,
**caractérisé en ce que**
la matière plastique de consistance ferme des sections en forme d'ailes (2, 3) est sélectionnée à partir du groupe des thermoplastes.

3. Elément de protection d'un bord selon revendication 1 ou 2,
**caractérisé en ce que**
la matière plastique de l'insert (16, 17) est choisie à partir du groupe des élastomères thermoplastiques.

4. Elément de protection d'un bord selon l'une des revendications précédentes,
**caractérisé en ce que**
l'insert (16, 17) et les sections en forme d'ailes (2, 3) sont extrudés en commun.

5. Elément de protection d'un bord selon l'une des revendications 1 à 3,
**caractérisé en ce que**
l'insert (16, 17) est soudé avec la section latérale (2, 3) respective.

6. Elément de protection d'un bord selon l'une des revendications précédentes,
**caractérisé en ce que**
les sections en forme d'ailes (2, 3) sont réalisées à la manière de profilés creux et sont renforcées par des entretoises (11, 12) prévues à l'intérieur d'elles.

7. Elément de protection d'un bord selon l'une des revendications précédentes,
**caractérisé en ce que**
un élément fonctionnel (23 - 25) est relié avec lui de manière amovible.

8. Elément de protection d'un bord selon la revendication 7,
**caractérisé en ce que**,
pour un couplage par engagement géométrique amovible de l'élément fonctionnel (23 - 25), un élément façonné (20) est formé dans au moins l'une des sections en forme d'aile (2, 3).

9. Elément de protection d'un bord selon la revendication 8,
**caractérisé en ce que**
l'élément façonné (20), destiné au couplage par engagement géométrique, amovible d'un élément fonctionnel (23 - 25), est un évidement.

10. Elément de protection d'un bord selon l'une des revendications 7 à 9,
**caractérisé en ce que**
l'élément fonctionnel (23, 25) forme un guidage pour le moyen de fixation.

11. Elément de protection d'un bord selon l'une des revendications 7 à 10,
**caractérisé en ce que**
l'élément fonctionnel (24) forme une butée pour l'appui de l'élément de protection d'un bord (1) contre une surface de la marchandise (G) à fixer.
